(19) Europäisches Patentamt / European Patent Office / Office européen des brevets

(11) **EP 4 408 812 B1**

(12) **EUROPEAN PATENT SPECIFICATION**

(45) Date of publication and mention of the grant of the patent:
**21.05.2025 Bulletin 2025/21**

(21) Application number: **22793464.3**

(22) Date of filing: **29.09.2022**

(51) International Patent Classification (IPC):
**C04B 14/28** (2006.01)  **C04B 28/04** (2006.01)
**E01C 3/00** (2006.01)  **E02B 3/06** (2006.01)

(52) Cooperative Patent Classification (CPC):
(C-Sets available)
**C04B 14/28; C04B 28/04; E01C 3/003;**
C04B 2111/0075; C04B 2111/00767; E02B 3/129
(Cont.)

(86) International application number:
**PCT/IB2022/059288**

(87) International publication number:
**WO 2023/053056 (06.04.2023 Gazette 2023/14)**

(54) **METHOD FOR THE STABILIZATION OF MARINE CLAYS**

VERFAHREN ZUR STABILISIERUNG VON MARINEN TONEN

PROCÉDÉ DE STABILISATION D'ARGILES MARINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 IT 202100025103**

(43) Date of publication of application:
**07.08.2024 Bulletin 2024/32**

(73) Proprietors:
• **Politecnico di Bari**
**70126 Bari (IT)**
• **Eth Zurich Institute Of Geotechnical Engineering**
**8092 Zürich (CH)**

(72) Inventors:
• **PUZRIN, Alexander**
**8006 Zürich (CH)**
• **VITONE, Claudia**
**70121 Bari (IT)**
• **PETTI, Rossella**
**71016 San Severo, Foggia (IT)**
• **PLÖTZE, Michael**
**Uitikon (CH)**
• **MARCHI, Maurizio Iler**
**20066 Melzo MI (IT)**

(74) Representative: **De Tullio, Michele Elio**
**Viale Liegi, 48/b**
**00198 Roma (IT)**

(56) References cited:
**JP-A- H1 015 538**

• **WANG LEI ET AL: "Green remediation and recycling of contaminated sediment by waste-incorporated stabilization/solidification", CHEMOSPHERE, vol. 122, 1 March 2015 (2015-03-01), GB, pages 257 - 264, XP055921549, ISSN: 0045-6535, DOI: 10.1016/ j.chemosphere.2014.11.071**
• **ZHAO ZENGFENG ET AL: "Use of uncontaminated marine sediments in mortar and concrete by partial substitution of cement", CEMENT AND CONCRETE COMPOSITES, ELSEVIER APPLIED SCIENCE, BARKING, GB, vol. 93, 18 July 2018 (2018-07-18), pages 155 - 162, XP085463854, ISSN: 0958-9465, DOI: 10.1016/J.CEMCONCOMP.2018.07.010**

- **HALIM SAMUEL DWIMA ET AL: "The use of hazardous sludge solidification and green-lipped mussel shells in cementitious material: a case study of ngcc power plant of priok", MATEC WEB OF CONFERENCES, vol. 147, 1 January 2018 (2018-01-01), pages 01008, XP055921595, DOI: 10.1051/matecconf/201814701008**
- **TODARO FRANCESCO ET AL: "Contaminated marine sediment stabilization/solidification treatment with cement/lime: leaching behaviour investigation", ENVIRONMENTAL SCIENCE AND POLLUTION RESEARCH, SPRINGER BERLIN HEIDELBERG, BERLIN/HEIDELBERG, vol. 27, no. 17, 10 April 2020 (2020-04-10), pages 21407 - 21415, XP037144141, ISSN: 0944-1344, [retrieved on 20200410], DOI: 10.1007/S11356-020-08562-1**
- **AMAR MOUHAMADOU ET AL: "From dredged sediment to supplementary cementitious material: characterization, treatment, and reuse", INTERNATIONAL JOURNAL OF SEDIMENT RESEARCH, ELSEVIER, AMSTERDAM, NL, vol. 36, no. 1, 8 June 2020 (2020-06-08), pages 92 - 109, XP086317991, ISSN: 1001-6279, [retrieved on 20200608], DOI: 10.1016/J.IJSRC.2020.06.002**

(52) Cooperative Patent Classification (CPC): (Cont.)

C-Sets
**C04B 14/28, C04B 20/026, C04B 20/04;
C04B 28/04, C04B 14/28, C04B 18/0418,
C04B 20/008, C04B 40/0028;
C04B 28/04, C04B 14/28, C04B 18/0436,
C04B 20/008, C04B 40/0028**

**Description**

TECHNICAL FIELD

The present invention relates to a novel method for stabilising marine clays such as sediments, marine sediments or dredging muds.

PRESENT STATUS OF THE ART

It is known that a big quantity of shells of mussels is transferred every day to rubbish dumps in Italy and in Europe in order for them to undergo expensive disposal procedures. They represent almost 10% of the total production of world fisheries and 14% of the total value of aquaculture production.

Just to mention Taranto, which accommodates one of the largest mussel farmers in the world, approximately 12 tonnes of waste per day are estimated to be transferred to rubbish dumps, some of which tonnes are presently disposed illegally.

"Marine clays" are natural deposits that are commonly located in coastal areas which, as defined in the present text, feature a negative consistency index, that is to say they are "soft". They feature a granulometric composition that is typical of fine-grained soils, *i.e.* at least 50 % of the particles have an equivalent diameter less than 65 microns.

Soft marine clays include, amongst others, dredging muds, sediments, and marine sediments, which are neoformation marine clays, usually featuring very low consistencies, high water content, and an abundant presence of organic substances.

It is known that in Europe, every year, 100 to 200 million $m^3$ of sediments are dredged. In Italy, every year, there are 50 million $m^3$ of sediments to dredged, with an annual increase of 5 million $m^3$. Also, dredged material management is expensive and complex.

Sediments are the product of alteration and degradation of rocks and undergo dissolution and transportation phenomena by air and run-off waters or ice and subsequent deposit and accumulation. Also, dredging muds are a mixture of water and silt or clay material, with a consistency ranging from semifluid to plastic. Even when not polluted by anthropic actions, sediments and dredging muds represent well-known high complexity geomaterials because of their variable contents of organic materials, carbonates (for example, fossils and seashells) and diatoms, because of their low strengths and high deformability. Consequently, their re-use shall necessarily pass through mechanical and/or chemo-mechanical treatment systems in the case of polluted sediments.

No European directives exist at present that specifically deal with a complete and uniform sediment management; however, Directive 2008/98/CE addresses alternative management options to the disposal of sediment as waste. The National regulations reflect the basic principles of the Waste Framework Directive, which give priority to re-use, recycling, and recovery of sediments without endangering human's health and damaging the environment. In Italy, the Ministerial Decree DM 173 of 2016 clearly opted for recognizing sediments as resources to be exploited rather than a waste to be disposed of.

However, in most cases sediments are still managed as a "waste" and the most used practice is their disposal in sediment tanks, with high environmental risks associated therewith. This is also due to the circumstance that, as said before, sediments, because of their physical-mechanical as well as chemical statuses, often require complex and (energetically and/or economically) expensive treatments in order to improve their performances and make their re-use possible.

One of the most used solutions consists of stabilising such materials by way of traditional, hydraulic binders, the production of which, as known, a release of big quantities of $CO_2$ in the atmosphere is associated with.

In order to reduce the environmental impact in this sector, the development and use of green binders in civil engineering applications have been progressively the object of studies and researches in the last years.

More recent researches propose the use of natural additions such as aggregates in cement mortars or as a partial replacement of traditional binders in preparing concretes. Amongst these, seashells have been the object of experiments both as additives of cement and as a substitute of inert materials in cement mortars and in concrete.

Shell treatment includes a washing step aiming at removing contaminants, organic materials, and ions such as chloride (Martinez-Garcia, C., González-Fonteboa, B., Martinez-Abella, F., López, D.C. (2017). Virtual special issue bio-based building materials. Performance of mussel shell as aggregate in plain concrete. Constr Build Mater 139:570-583. https://doi.org/10/1016/j.conbuildmat.2016.09.091), crushing, milling, sieving (the sizes proposed in the literature range from 5 mm to 63 mm) and, finally, a thermal treatment. Calcium oxide (CaO), which is an essential component for enhancing concrete strength (Lertwattanaruk, P., Makul, N., & Siripattarapravat, C. (2012) Utilization of ground waste seashells in cement mortars for masonry and plastering. Journal of Environmental Management, 111, 133-141. https://doi.org/10.1016/j), can be produced starting from shells by calcining them, *i.e.* submitting them to a high temperature treatment (from 500 to 1000 °C ca), in order to foster conversion of $CaCO_3$ into carbon and calcium oxide (CaO) (Olivia, M.,

& Oktaviani, R. (2017). Properties of concrete containing ground waste cockle and clam seashells. Procedia Engineering, 171, 658-663. https://doi.org/ 10.1016/j.proeng.2017.01.404).

The thermal shell treatment process is often cited and its temperature varies as a function of the crystallinity and amorphism level to be achieved, as well as of the nature of the products that are formed through the volatility of organic impurities and saline substances. Specifically, the thermal treatments proposed in the cited documents relate to temperatures ranging from 115 °C ca. for 24h to 1000 °C ca. for 1h. The thermal treatment essentially depends on the role to be played by shells in preparing the final product: higher treatment temperatures (calcination) are necessary if shells are used to partially replace a traditional binder in preparing concretes; conversely, temperatures below 120°C ca. are sufficient if shells are used as an inert material.

Some authors (e.g., Bamigboye, G. O., Nworgu, A. T., Odetoyan, A. O., Kareem, M., Enabulele, D. O., Daniel, E., & Bassey, D. E. (2021). Sustainable use of seashells as binder in concrete production: Prospect and challenges. Journal of Building Engineering, 34, 101864. https:// doi.org/10.1016/j.jobe.2020.101864) verified the possibility of re-using shells as a substitute of traditional limestone in cement production. On the other hand, other studies focused on the use of shells as a substitute of rough and/or fine aggregate in concrete production (e.g. Chandra, K., Behera, S., & Jena, S. (2020). Effect of rice husk ash on mechanical properties of concrete containing crushed seashell as fine aggregate. Materials Today: Proceedings, 32, 838-843. https://doi.org/10.1016/j.matpr.2020.04.049). The percentages typically considered when seashell powder replaces cement range from 5 to 20 % by weight, with optimum ratios of 5 % in order to cater for appropriate mechanical characteristics.

Document JP H10 15538 A describes a method for improving quality of sediment on sea areas, river beds, lake and marsh bottoms. Heat-treated shellfish fossil is mixed with the sediment and a cement as solidifying agent to prepare a porous body.

All this literature mainly relates to seashells and in some cases only it is spoken about mussel shells which, as known, have a similar composition, both being mainly formed of silica oxide and calcium oxide.

All in all, mortars produced by using mussel shell powder feature a more compact microstructure, a better cement setting, and a better mortar strength, thus allowing to reduce the cement content in the final composition of the mortar and to reduce production costs. However, mortar strength can only be improved by calcining the shells and consequently the energy cost of the thermal treatment that the shells are submitted to before being re-used remains high. In few cases of treatments at lower temperatures (120 °C ca.), replacement percentages have been tested up to 20-25 % and to 12.5 % of sand and/or gravel for structural and non-structural concretes.

The present status of the art also includes contributes related to soil stabilisation with innovative solutions which make use of natural additions and/or traditional binders. Amongst these, let's cite the addition of oyster shells calcined at 1000 °C to Portland cement and lateritic soil sands (e.g., Ayininuola, G.M., Afolayan, O. D. (2018). Potential of Oyster Shell Ash Activated with Cement as soil Stabilizer for Road Construction. International Journal of Engineering and Advanced Technology (IJEAT) ISSN: 2249 - 8958, Volume-7 Issue-5, June 2018).

With reference to mechanical stabilisation of sediments and dredging muds, the documents known in the present status of the art make reference to mechanical treatments based on traditional hydraulic binders (Federico, A., Vitone, C., Murianni, A. (2015). On the mechanical behaviour of dredged submarine clayey sediments stabilised with lime or cement. Canadian Geotechnical Journal 52:2030-2040) or mention is made of the addition of the following elements as innovative cementitious binders:

- super-absorbing biopolymers introduced in the cement mixing method as a water reduction agent in order to improve the strength properties of the cemented sediment at very high water contents;
- bacteria;
- combinations of hemi-hydrated phosphor-gypsum, sodium metasilicate, and pozzolanic waste materials, such as blast furnace slags.

The documents of the present status of the art are apparently limited in that they do not use mussel shells for re-use of sediments or dredging muds. Also, they do not report any possibility of treating sediments or muds with mixtures of hydraulic binders and mussel shell powders. Also, in the present status of the art, shells are generally treated by bringing them to calcination with a greater energy consumption and, when treated at lower temperatures, they operate as inert materials in mortars or in concretes. Finally, they are used as additions for improving setting and workability of binders, not in an even partial replacement of cement.

Therefore, a need is strongly felt about for providing products for industrial use that, as compared to those making use of traditional cements, are capable not only of exploiting the necessary functional characteristics, but also minimizing the environmental impact resulting from their use.

**OBJECTS AND SUMMARY OF THE INVENTION**

The object of the present invention is to overcome the drawbacks of the present status of the art. Specifically, an object of the present invention is to provide a method for stabilising marine clays, such as sediments, marine sediments, or dredging muds, by using mussel shell powder and cement. A second object of the present invention is to provide a marine clay, sediments, marine sediments or dredging muds, mussel shell powder and cement based product.

The product obtained in the present invention is a product obtained from re-using two types of waste, easy to find and difficult to dispose of, together with cement: the former waste relates to marine clays, such as sediments, marine sediments or dredging muds, and the second waste relates to mussel shells characterized by such mechanical properties as to render it suitable for a variety of industrial applications.

Since the product according to this invention is formed of as much as two types of waste easy to find, it can be defined as a low environmental impact one.

A further object of the present invention is that of using the product thus obtained directly in situ for preparing road subgrades or for manufacturing a prefabricated product ex-situ, such as an outdoor self-locking eco-block, an artificial breakwater (tetrapod or antifer or other), or a quay construction boulder.

These objects of the present invention and others are achieved by using a method for treating marine clays comprising the following steps:

    a. heating mussel shells to a temperature ranging from 90°C to 140°C, preferably at 105°C, below than the mussel shell calcination temperature;
    b. milling the heated mussel shells up to obtaining a powder having an appropriate particles size distribution;
    c. mixing the milled shell powder obtained in step b) with a cement, in a proportion ranging from 5 % to 50 % by weight as referred to the total weight of cement plus powder, in order to obtain a solid composition of powders;
    d. obtaining a final product by mixing the solid composition of powders obtained in step c) with marine clays, wherein said marine clays sediments are used in their natural state in terms of content of water and are characterised by a negative consistency index, wherein said solid composition of powders is present in a percentage ranging from 2 % to 20 % by weight as referred to the weight of the final product.

Step a) of the method according to the present invention comprises a thermal treatment aiming at eliminating most organic substances that are possibly present in the outer part of the shell itself. Such thermal treatment is characterized in that it takes place well at a temperature ranging from 90 °C to 140°C, preferably at 105°C, for a duration time ranging from 12 to 50 hours, preferably 48 hours. A person skilled in this sector might easily vary this duration time as a function of the temperature selected for thermal treatment.

In a preferred aspect of this invention, mussel shells are washed by running water for approximately ten minutes before undergoing the described thermal treatment. The water used for this purpose is either at the ambient temperature or is preferably hot water (from 30 °C to 60 °C). As stated before, marine clay is a term that comprises different types of materials. According to the present invention, use is advantageously made of a marine clay selected from a sediment, a marine sediment, or a dredging mud, but it might even be a river or lake sediment.

The marine clay of the method according to the invention is characterized in having a negative consistency index, *i.e.* CI < 0.

The consistency index (CI) is an index that defines material consistency. In order to assess the type of behaviour of a soil and its consistency status, it is necessary to consider its water content and compare it to the values corresponding to the liquid limit ($w_L$) and to the plastic limit ($w_P$). The liquid limit and the plastic limit are known in geotechnics as the Atterberg limits, and they indicate the limit value of the water content whereby a transition of the physical status of a sediment takes place.

This comparison is necessary because, water content being equal, not all soils have the same behaviour, which means that different soils will have different liquid and plastic limit values. $w_L$ and $w_P$ limit values are determined according to standard procedures (ASTM D4318, 2010).

Having calculated $w_L$ and $w_P$, the plasticity index (PI) is calculated on the basis of their difference:

$$PI = w_L - w_P \quad (1)$$

which just represents the range of water content values internally to which a soil is in the plastic status. At this point, the consistency index (IC) can be calculated by using the following formula (2)

$$CI = (w_L - w) / PI \quad (2)$$

where w is the water content.

In a preferred aspect of this invention, the particles size distribution of the marine clay is such that at least 50 % of the particles have a diameter less than 75 $\mu$m.

Even though any kinds of mussel shells can be used in the present invention, in a particularly preferred aspect shells of mussels of the Mytilus galloprovincialis type, i.e., a waste that is easy to find and difficult to dispose of in the mussel culture industry, are used.

The mussel shells according to step b) of the method of the invention are ground to a particle size of less than 300 microns, preferably to a particle size of between 60 $\mu$m and 100 $\mu$m.

In a preferred aspect of the invention, the mussel shell powder is sieved to a particle size characterised by $D_{50}$= 6.32 $\mu$m and $C_u$=2.213. $D_{50}$ is the diameter corresponding to 50 % of passing, whereas $C_u$ is a coefficient that assesses the uniformity of a sample in terms of grain size distribution, and it is defined by the following formula (3):

$$C_u = D_{60}/D_{10} \qquad (3)$$

where $D_{60}$ is the diameter corresponding to 60 % of passing and $D_{10}$ is the diameter corresponding to 10% of passing.

After obtaining the mussel shell powder milled according to step b), this one is mixed with a cement.

In a preferred aspect of this invention, reference is made to a cement as described in the UNI EN 197-1(2011) standard.

All cements described in said standard can be conveniently used in the process of the present invention, whereas the type I cements (Portland cement) and the type III ones (slag cement) are particularly preferred. The powder obtained from the milled shells is mixed with the cement according to the UNI EN 197-1 standard in a proportion from 15 % to 50 % by weight as referred to the total powder and cement in order to obtain a solid composition of powder.

In the last step of the process, the solid composition of powders obtained in step c) is mixed with marine clays characterized by a negative consistency index, wherein said solid composition is present in a percentage from 2 % to 20 % by weight as referred to the final product. Preferably the composition according to step c) ranges from 8 % to 16 % by weight as referred to the final product. A second object of the present invention is a product obtained according to the method described in steps a) thru d) as above.

A further object of the present invention is the use of the product obtained according to the method described in steps a) thru d) as described above directly in situ for preparing a road sub-grade or for manufacturing ex-situ a prefabricated product such as, for example, an outdoor self-locking eco-block, an artificial breakwater (tetrapod or antifer or other), or a boulder for the construction of a quay.

Further characteristics and objects of the present invention will be more apparent from the following description.

Unless otherwise specified, all terms of the art, notations, and other scientific terms here used are meant to have the meanings commonly understood by those who are skilled in the technique that this description refers to. In some cases, terms with commonly understood meanings are here defined for the sake of clearness and/or for a prompt reference; consequently, the insertion of such definitions in the present description shall not be interpreted as being representative of a substantial difference from that which is a generally understood in the art. The terms "comprising", "having", "including" and "containing" are to be considered as open terms (i.e., the meaning "comprising, but not limited to") and are to be also considered as a support for terms like "to basically consist of", "basically consisting of", "to consist of" or "consisting of". The use of "for example", "etc.", "or" indicates non-exclusive alternatives without any limitations, unless otherwise specified. The use of "includes" means " include", but is not limited to" unless otherwise specified.

## BRIEF DESCRIPTION OF THE FIGURES

The invention will be described here below with reference to a number of examples which are provided for exemplary, non-limitative purposes as illustrated in the attached figure.

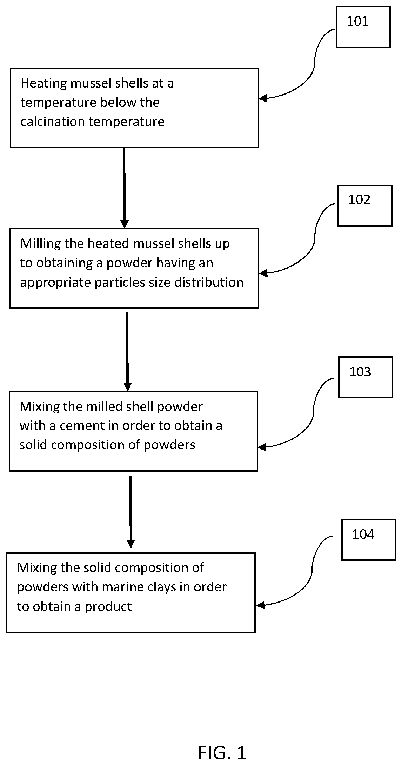

Figure 1 summarily describes the steps of the method according to the present invention.

## DETAILED DESCRIPTION OF THE INVENTION

Whereas the invention is susceptible of various alternative modifications, some preferred embodiments will be described below in details. However, it is understood that there is no intention of limiting the invention to the specific embodiment here illustrated, but, on the contrary, the invention is meant to cover all modifications that fall within the scope of the invention as set forth in the claims. The individual steps of the process are indicated in the process flowchart illustrated in Figure 1.

In the process flowchart of figure 1, mussel shells are treated at a temperature lower than the calcination one, in order to eliminate most organic substances that might be present in the shells 101.

At the end of the thermal treatment, the heated mussel shells are milled up to obtaining a powder having an appropriate particles size distribution 102.

The powder obtained from the properly milled shells is mixed with a cement, preferably according to the UNI EN 197-1 (2011) standard in a proportion ranging from 15 % to 50 % by weight as referred to the total weight of the cement and of the powder in order to obtain a solid composition of powders 103.

Finally, the solid composition of powders is mixed with marine clays characterized by a negative consistency index CI < 0, wherein said solid composition is present in a proportion from 2 % to 20 % by weight as referred to the total weight of the final product 104.

The present invention features numerous particularly important advantages.

First of all, the thermal treatment 101 is performed at temperatures well below than the calcination one (500 °C), namely from 90 °C to 140°C, preferably 105 °C, because advantage is taken from the chemical activation potentials deriving from the addition of marine clays in which the fine fraction is predominant.

Secondly, it is not necessary to add water to obtain the final product in the marine clays-cement mixing step because use is made of sea water already present in the sediments. The final product is easy to obtain because the sediments are used in their natural state in terms of content of water and salts in the interstitial fluid and natural organic substance.

In this regard, here follows a calculation of the water content (w) of the natural sediment obtained by weighing before and after drying:

w (%) = ([humid sample weight (gr)- dry sample weight (gr)]) /(dry sample weight (gr)) x 100 (w sediment= 74 %)

This water content has been subsequently used to calculate the addition of binder, as described in the examples below.

The following Table 1 shows the main physical-chemical characteristics of the sea water used in the present invention:

Table 1

| PH | Conductivity ($\mu$S/cm) | Salinity (ppt) | Chlorides (mg/l) | Sulphates (mg/l) |
|---|---|---|---|---|
| 9.21 | 50.4 | 33.17 | 6750 | 2810 |

Concerning the mineralogic characterisation of the sediment used in the present invention, this one is shown in Table 2 below.

Table 2

| Mineral | Sediment | |
|---|---|---|
| | (% by mass) | error |
| Quartz | 17.4 | 0.3 |
| Microcline | 2.0 | 0.2 |
| Orthoclase | 2.0 | 0.3 |
| K-Feldspar group | 4.0 | 0.5 |
| Albite | 6.2 | 0.3 |
| Plagioclase group | 6.2 | 0.3 |
| Calcite | 23.8 | 0.6 |
| Aragonite | 3.1 | 0.2 |
| Dolomite / Ankerite | 3.1 | 0.2 |
| Alite | 2.2 | 0.1 |
| Pyrite | 1.1 | 0.1 |
| Rutile | 0.4 | 0.1 |
| Anatase | 0.6 | 0.1 |
| Amorphous | 12.7 | 1.2 |

(continued)

| Mineral | Sediment | |
|---|---|---|
| | (% by mass) | error |
| Tot. Non-clay | 74.7 | |
| Kaolinite | 3.6 | 0.5 |
| Kaolinite group | 3.6 | 0.5 |
| Muscovite 2M1 | 7.8 | 0.3 |
| Mica (bi-octahedral) | 7.6 | 0.3 |
| Smectite (bi-octahedral) | 10.1 | 1.5 |
| Chloride (tri-octahedral | 4.0 | 0.3 |
| Tot. Clay /phyllosilicate | 25.3 | |
| Tot. identified | 100.0 | |

Concerning the treatment of mussel shells, these ones have been taken from mussel farmers in Taranto and have been submitted to a cleaning and milling treatment.

In particular, 1 kg of mussel shells have been washed in hot water (40 °C for 10 minutes). Then they have been put in an aluminium tray and inserted into an oven in order to submit them to a thermal treatment at 105 °C for 48 hours.

At the end of the thermal treatment, they have been taken off from the oven and milled in a Retsch crusher for 15 minutes. They have subsequently been sieved thus obtaining a particles size distribution characterised by $D_{50} = 6.32$ mm and $Cu = 2.213$, where:

$D_{50}$ is the diameter corresponding to 50 % of passing and $Cu$ is a coefficient that assesses the uniformity of a sample in terms of grain size distribution and is defined as: $Cu = D_{60}/D_{10}$, where $D_{60}$ is the diameter corresponding to 60 % of passing and $D_{10}$ is the diameter corresponding to 10 % of passing.

In all examples described below, the cements used are cements according to the EN 197.1 (2011) standard marketed by Italcementi®.

A particularly significant aspect is in that the marine clays mixed with mussel shell powder present a synergetic effect in the presence of cement.

The cement mixed with mussel shell powder only presents a remarkable decrement of mechanical strengths as referred to cement as such, and the cement mixed with the solid mussel shell powder/marine clay composition behaves better in terms of mechanical strengths as compared to the cement only mixed with marine clays only.

### EXAMPLE 1 (reference) Tests in standard mortar.

Mussel shells treated as described above have been used in replacement of Portland cement for producing standard mortars (25 % by weight as referred to the total weight of the components). The standard mortar has been prepared according to the indications on composition, sample preparation, and curing, as set forth in the UNI EN196-1, 2016 standard.

The results of the mechanical tests have been compared to those of the Portland cement (CEM I) used as a standard, as detailed in tables 3 and 4 below.

Table 3

| Standard mortar with CEM I | | | | | |
|---|---|---|---|---|---|
| Seasoning | Weight (g) | Rc A (MPa) | Rc B (MPa) | Rc Average (MPa) | Rf (MPa) |
| 7 days | 577.70 | 55.39 | 55.91 | 55.65 | 10.06 |
| 28 days | 578.30 | 64.65 | 64.45 | 64.55 | 9.10 |

where Rc stands for compressive strength and Rf stands for flexural strength.

Table 4

| Standard mortar with CEM I and mussel shell flour (25 %) | | | | | |
|---|---|---|---|---|---|
| Seasoning | Weight (g) | Rc A (MPa) | Rc B (MPa) | Rc Average (MPa) | Rf (MPa) |
| 7 days | 495.80 | 25.50 | 26.88 | 26.19 | 4.62 |
| 28 days | 500.70 | 27.18 | 27.87 | 27.52 | 4.73 |

As it can be noted from a comparison between the data relevant to Tables 3 and 4, the addition of mussel shell powder to CEM I drastically reduces the mechanical strength of the standard mortar.

### EXAMPLE 2 (Invention)

Stabilisation of marine clay in the form a marine sediment with a quantity of binder equal to 8 % as compared to the sediment. By binder we mean a solid cement (6%) and mussel shell powder (2 %) composition.

Approximately 1 kg (=$P_{tot}$) of marine sediment coming from a fill-in basin in the port of Taranto has been taken and mixed in its natural status (water content, w, equal to 74 % measured as described above in the description) in a mechanical mixer for 10 minutes at a speed of 285 RPM. The mussel shell powder has been prepared as described above in the description.

A quantity corresponding to 2 % as referred to the weight of the dry sediment has been weighed. In details:

$$\text{Weight calculation (dry)} \qquad P_S = P_{tot}/(1+w) = 1000/(1+0.74) = 574.7g$$

$$\text{Quantity of mussel shell powder} \qquad = P_s*2/100 = 11.49g$$

A quantity corresponding to 6% of Portland cement 52.5 R type I has been weighed, the percentage having been calculated as referred to the weight of the dry sediment ($P_s$).

In details:

$$\text{Weight calculation (dry)} \qquad P_s = P_{tot}/(1+w) = 1000/(1+0.74) = 574.7 \text{ g}$$

$$\text{Quantity of cement} \qquad = P_s*6/100 = 34.48 \text{ g}$$

The two powders, cement and shell , have been joined, first between each other and subsequently mixed with the sediment. Thus, the material has been mixed for 5 minutes at a speed of 140 RPM. The same procedure has been repeated for comparison purposes, by using the Portland cement 52.5 R type I at 8 % by weight as referred to the sediment.

The results of the product, in terms of mechanical strengths after 28 days of curing, are shown in Table 5.

IC is the consistency index, an index that assesses the consistency of a product calculated as described in the text, and R_Cu (kPa) is the undrained shear strength, *i.e.* the maximum tangential tension that can be applied to the soil before a breakage occurs in terms of total tensions.

Table 5

| Geo-stabilised product | CI | R_C$_U$ (kPa) |
|---|---|---|
| CEM I 52.5R_6% + 2%_mussels | 0.64 | 147.5 |
| CEM I 52.5R_8% (comparison) | 0.59 | 100 |

As it can be noted from the data shown in Table 5, a partial replacement of CEM I with a mussel shell powder increments the value for the consistency index, CI, as well as the undrained shear strength of the mixture, thus resulting in an overall improvement of its mechanical characteristics.

### EXAMPLE 3 (invention)

A marine clay stabilisation has been performed in the form of marine sediment to obtain a product as described in the example 2, but using a cement type III 42.5 N instead of cement type I 52.5R. The results after 28-day of curing are shown in Table 6.

Table 6

| Geo-stabilized product | CI | R_CU(kPa) |
|---|---|---|
| CEM III 42.5N_6% + 2%_mussels | 0.65 | 173.5 |
| CEM III 42.5N_8% (comparison) | 0.61 | 165.6 |

As it can be noted from the data of Table 6, a partial replacement of CEM III with mussel shell powder increments the value for the consistency index, CI, as well as the undrained shear strength of the mixture, thus resulting in an overall improvement of its mechanical characteristics.

## EXAMPLE 4 (invention)

Marine clay stabilisation in the form of marine sediment with a quantity of binder equal to 16 % as reference to the sediment. By binder, we mean a solid cement (12 %) and mussel shell powder (4 %) composition.

Approximately 1 kg (= $P_{tot}$) of marine sediment coming from a fill-in basin in port of Taranto has been taken and mixed in its natural status (water content, w, equal to 74 % measured as described above) in a mechanical mixer for 10 minutes at a speed of 285 RPM.

The mussel shell powder has been prepared as described above.

A quantity corresponding to 4 % by weight as referred to the dry weight of the sediment has been weighed. In details:

$$\text{Weight calculation (dry)} \qquad P_s = P_{tot}/(1+w) = 1000/(1+0.74) = 574.7 \text{ g}$$

$$\text{Quantity of mussel shell powder} \qquad = P_s*4/100 = 22.99 \text{ g}$$

A quantity corresponding to 12 % of Portland cement 52.5 R type I has been weighed, as a percentage calculated as referred to the dry weight of the sediment ($P_s$).

In details:

$$\text{Weight calculation (dry)} \qquad P_s = P_{tot}/(1+w) = 1000/(1+0.74) = 574.7 \text{ g}$$

$$\text{Quantity of cement} \qquad = P_s*12/100 = 68.96 \text{ g}$$

The two powders, cement and shell , have been joined, first between each other and subsequently mixed with the sediment. Thus, the material has been mixed for 5 minutes at a speed of 140 RPM. For comparison purposes, the procedure has been repeated by using Portland cement 52.5 5 R type I at 16 % by weight as referred to the sediment.

The results after 28 days of seasoning are shown in Table 7.

Table 7

| Geo-stabilised product | CI | R_C_U(kPa) |
|---|---|---|
| CEM I 52.5R_12% + 4%_mussels | 1.25 | 557 |
| CEM I 52.5R_16% (comparison) | 1.22 | 511.33 |

The data of Table 7 show that a partial replacement of CEM I with mussel shell powder increments the value for the consistency index, CI, as well as the undrained shear strength of the mixture, thus resulting in an overall improvement of its mechanical characteristics.

## EXAMPLE 5 (invention)

A marine clay stabilisation has been performed in the form of marine sediment to obtain a product as described in example 6, but using a cement type III 42.5 N instead of a cement type I 52.5R. The results after 28 days of curing are shown in Table 8.

Table 8

| Geo-stabilized product | CI | R_C$_U$(kPa) |
|---|---|---|
| CEM III 42.5N_12% + 4%_mussels | 1.19 | 545 |
| CEM III 42.5N_16% (comparison) | 1.16 | 540.5 |

The data of Table 8 show that the partial replacement of CEM III with mussel shell powder increments the value for the consistency index, CI, as well as the undrained shear strength of the mixture, thus resulting in an overall improvement of its mechanical characteristics.

**EXAMPLE 6 (comparison)**

An attempt has been made to stabilise the marine clay with a quantity of powders equally shared between cement and mussel shell powder (50/50).

Approximately 1 kg (=P$_{tot}$) of marine sediment coming from a fill-in basin in port of Taranto has been taken and mixed in its natural state (water content, w, equal to 74 % measured as described above) in a mechanical mixer for 10 minutes at a speed of 285 RPM.

The mussel shell powder has been prepared as described above.

A quantity corresponding to 4 % as referred to the dry weight of the sediment has been weighed. In details:

Weight calculation (dry) $\qquad$ $P_s= P_{tot}/(1+w) = 1000/ (1+0.74) = 574.7$ g

Quantity of mussel shell powder $\qquad$ $= P_s*4/100= 22.98$ g

A quantity corresponding to 4% of Portland cement 52.5 R type I has been weighed, as a percentage calculated as referred to the dry weight of the sediment (P$_s$).

In details:

Weight calculation (dry) $\qquad$ $P_s= P_{tot}/(1+w) = 1000/ (1+0.74) = 574.7$ g

Quantity of cement $\qquad$ $= P_s*4 / 100= 22.98$ g

The two powders, cement and shell, have been joined, first between each other and subsequently mixed with the sediment. Thus, the material has been mixed for 5 minutes at a speed of 140 RPM. The results of the product after 28 days of curing are shown in Table 9.

IC is the consistency index, an index that assesses the consistency of a product calculated as described in the text, and R_C$_u$ (kPa) is the undrained shear strength, i.e. the maximum tangential tension that can be applied to a soil before breakage takes place in terms of total tensions.

Table 9

| | CI | R_C$_U$ (kPa) |
|---|---|---|
| CEM I 52.5R_4% + 4%_mussels | 0.46 | 28.5 |
| CEM I 52.5R_8% (comparison) | 0.59 | 100 |

**Claims**

1. A method for stabilizing marine clays comprising the following steps:

   a. Heating mussel shells at a temperature ranging from 90°C to 140°C, preferably at 105 °C, below than the mussel shell calcination temperature (101),
   b. Milling the heated mussel shells up to obtaining a powder having an appropriate particles size (102).
   c. Mixing the milled shell powder obtained in step b) with a cement, said cement being present in a quantity ranging from 15 % to 50 % by weight as referred to the total weight of cement and powder, in order to obtain a solid composition of powders (103).

d. Obtaining a final product by mixing the solid composition of powders obtained in step c) with marine clays, wherein said marine clays sediments are used in their natural state in terms of content of water and are **characterized by** a negative consistency index,

said consistency index being an index that defines material consistency and being calculated by using the following formula

$$CI = (w_L - w) / PI$$

where

w is the water content, $w_L$ the liquid limit and PI is the plasticity index, representing the range of water content values internally to which a soil is in the plastic status, said plasticity index being calculated on the basis of the difference between said $w_L$ the liquid limit and the plastic limit $w_P$,

and wherein said solid composition of powders is present in a percentage from 2 % to 20 % by weight as referred to the weight of the final product (104).

2. The method according to claim 1, wherein the marine clays are a sediment, a marine sediment, or a dredging mud.

3. The method according to claim 1 wherein the marine clay has at least 50% of the particles size having a diameter of less than $75\mu m$.

4. The method according to claim 1, wherein the shells used are of the type Mytilus galloprovincialis.

5. The method according to any of the previous claims, wherein the mussel shells are ground to a particle size of less than 300 $\mu m$, preferably between 60 $\mu m$ and 100 $\mu m$.

6. The method according to any of the previous claims, wherein the cement according to step c) is selected amongst a type I cement and a type III cement according to the UNI EN 197-1(2011) standard.

7. The method according to any of the previous claims, wherein the solid composition of powders ranges from 8 to 16 % by weight as referred to the weight of the final product.

8. A product obtained in accordance with the method according to any of claims 1 thru 7.

9. The use of the product of claim 8, directly in situ for preparing a road subgrade.

10. The use of the product of claim 8 for manufacturing ex-situ a prefabricated product such as, for example, a self-locking outdoor eco-block, artificial breakwater against wave motion (tetrapod or antifer or other), a boulder for building a quay.

**Patentansprüche**

1. Verfahren zur Stabilisierung mariner Tone, umfassend die folgenden Schritte:

   a. Erhitzen von Muschelschalen auf eine Temperatur zwischen 90°C und 140°C, vorzugsweise bei 105°C, unterhalb der Kalzinierungstemperatur der Muschelschalen (101) ;

   b. Mahlen der erhitzten Muschelschalen zu einem Pulver mit geeigneter Partikelgröße (102);

   c. Mischen des in Schritt b) erhaltenen gemahlenen Schalenpulvers mit einem Zement, wobei der Zementanteil zwischen 15 % und 50 % des Gesamtgewichts von Zement und Pulver beträgt, um eine feste Pulverzusammensetzung zu erhalten (103);

   d. Gewinnen eines Endprodukts durch Mischen der in Schritt c) erhaltenen festen Pulverzusammensetzung mit marinen Tonen, wobei die marinen Tonsedimente werden in ihrem natürlichen Zustand hinsichtlich ihres Wassergehalts verwendet und weisen einen negativen Konsistenzindex auf,

   wobei dieser Konsistenzindex definiert die Materialkonsistenz und wird nach folgender Formel berechnet:

$$CI = (w_L - w) / PI$$

WO w der Wassergehalt, $w_L$ die Fließgrenze

und PI der Plastizitätsindex ist, der den Bereich der Wassergehaltswerte repräsentiert, innerhalb deren ein Boden in einem plastischen Zustand vorliegt, wobei der Plastizitätsindex wird anhand der Differenz zwischen $w_L$ (Fließgrenze) und $w_P$ berechnet,

und wobei die feste Pulverzusammensetzung liegt in einem Gewichtsanteil von 2 bis 20 % mit Bezug auf das Endproduktgewicht vor (104).

2. Verfahren nach Anspruch 1, wobei die marinen Tone Sedimente, marine Ablagerungen oder Baggerschlamm sind.

3. Verfahren nach Anspruch 1, wobei das marine Ton mindestens 50 % der Partikelgröße aufweist, die einen Durchmesser von weniger als 75 $\mu$m aufweisen.

4. Verfahren nach Anspruch 1, wobei die verwendeten Muschelschalen vom Typ Mytilus galloprovincialis sind.

5. Verfahren nach einem der vorhergehenden Ansprüche, wobei die Muschelschalen auf eine Partikelgröße von weniger als 300 $\mu$m, vorzugsweise zwischen 60 $\mu$m und 100 $\mu$m, gemahlen werden.

6. Verfahren nach einem der vorhergehenden Ansprüche, wobei der Zement gemäß Schritt c) aus einem Zement vom Typ I und einem Zement vom Typ III gemäß der Norm UNI EN 197-1 (2011) ausgewählt wird.

7. Verfahren nach einem der vorhergehenden Ansprüche, wobei der Feststoffanteil der Pulver 8 bis 16 Gew.-%, bezogen auf das Gewicht des Endprodukts, beträgt.

8. Produkt erhalten in Übereinstimmung mit dem Verfahren nach einem der Ansprüche 1 bis 7.

9. Verwendung des Produkts nach Anspruch 8, direkt vor Ort zur Vorbereitung eines Straßenunterbaus.

10. Verwendung des Produkts nach Anspruch 8, zur Herstellung eines vorgefertigten Produkts, wie z.B. eines selbstsichernden Öko-Blocks für den Außenbereich, eines künstlichen Wellenbrechers (tetrapod oder antifer oder andere), eines Felsbrockens für den Bau eines Kais.

**Revendications**

1. Procédé de stabilisation des argiles marines comprenant les étapes suivantes :

a. chauffage des coquilles de moules à une température comprise entre 90 °C et 140 °C, de préférence à 105°C, inférieure à la température de calcination des coquilles de moules (101) ;
b. broyage des coquilles de moules chauffées jusqu'à obtention d'une poudre de granulométrie appropriée (102);
c. mélange de la poudre de coquilles broyée obtenue à l'étape b) avec un ciment, ledit ciment étant présent en une quantité comprise entre 15 % et 50 % en poids par rapport au poids total du ciment et de la poudre, afin d'obtenir une composition solide de poudres (103);
d. obtention d'un produit final par mélange de la composition solide de poudres obtenue à l'étape c) avec des argiles marines, dans lequel lesdits sédiments d'argiles marines sont utilisés à l'état naturel en termes de teneur en eau et sont **caractérisés par** un indice de consistance négatif,
ledit indice de consistance étant un indice définissant la consistance du matériau et étant calculé selon la formule suivante :

$$CI = (w_L - w) / PI$$

où
w est la teneur en eau, $w_L$ la limite de liquidité et PI est l'indice de plasticité, représentant la plage de valeurs des teneurs en eau internes d'un sol à l'état plastique, ledit indice de plasticité étant calculé sur la base de la différence entre ledit $w_L$ (limite de liquidité) et la limite de plasticité $w_P$,
et dans lequel ladite composition solide de poudres est présente avec un pourcentage compris entre 2 % et 20 % en poids du produit final (104).

2. Procédé selon la revendication 1, dans lequel les argiles marines sont un sédiment, un sédiment marin ou une boue de dragage.

3. Procédé selon la revendication 1, dans lequel au moins 50 % des particules d'argile marine ont un diamètre inférieur à 75 $\mu$m.

4. Procédé selon la revendication 1, dans lequel les coquilles utilisées sont de type Mytilus galloprovincialis.

5. Procédé selon l'une quelconque des revendications prècédentes, dans lequel les coquilles de moules sont broyées jusqu'à obtenir une granulométrie inférieure à 300 $\mu$m, en préférence entre 60 $\mu$m et 100 $\mu$m.

6. Procédé selon l'une quelconque des revendications précédentes, dans lequel le ciment selon l'étape c) est choisi parmi un ciment de type I et un ciment de type III selon la norme UNI EN 197-1(2011).

7. Procédé selon l'une quelconque des revendications précédentes, dans lequel la composition solide des poudres est comprise entre 8 et 16 % en poids par rapport au poids du produit final.

8. Produit obtenu selon le procédé selon l'une quelconque des revendications 1 à 7.

9. Utilisation du produit selon la revendication 8, directement in situ pour la préparation d'une couche de fondation routière.

10. Utilisation du produit selon la revendication 8, pour la fabrication ex situ d'un produit préfabriqué comme par exemple : un bloc écologique extérieur autobloquant, un brise-lames artificiel contre le mouvement des vagues (tétrapode ou antifer ou autre) et un bloc pour la construction d'un quai.

101

Heating mussel shells at a
temperature below the
calcination temperature

102

Milling the heated mussel shells up
to obtaining a powder having an
appropriate particles size distribution

103

Mixing the milled shell powder
with a cement in order to obtain a
solid composition of powders

104

Mixing the solid composition of
powders with marine clays in order
to obtain a product

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1015538 A

**Non-patent literature cited in the description**

- **MARTINEZ-GARCIA, C.** ; **GONZÁLEZ-FONTE-BOA, B.** ; **MARTINEZ-ABELLA, F.** ; **LÓPEZ, D.C.** Virtual special issue bio-based building materials. Performance of mussel shell as aggregate in plain concrete. *Constr Build Mater*, 2017, vol. 139, 570-583, https://doi.org/10/1016/j.conbuildmat.2016.09.091
- **LERTWATTANARUK, P.** ; **MAKUL, N.** ; **SIRIPAT-TARAPRAVAT, C.** Utilization of ground waste seashells in cement mortars for masonry and plastering. *Journal of Environmental Management*, 2012, vol. 111, 133-141, https://doi.org/10.1016/j
- **OLIVIA, M.** ; **OKTAVIANI, R.** Properties of concrete containing ground waste cockle and clam seashells. *Procedia Engineering*, 2017, vol. 171, 658-663, https://doi.org/ 10.1016/j.proeng.2017.01.404
- **BAMIGBOYE, G. O.** ; **NWORGU, A. T.** ; **ODETOYAN, A. O.** ; **KAREEM, M.** ; **ENABULELE, D. O.** ; **DANIEL, E.** ; **BASSEY, D. E.** Sustainable use of seashells as binder in concrete production: Prospect and challenges. *Journal of Building Engineering*, 2021, vol. 34, 101864, https:// doi.org/10.1016/j. jobe.2020.101864
- **CHANDRA, K.** ; **BEHERA, S.** ; **JENA, S.** Effect of rice husk ash on mechanical properties of concrete containing crushed seashell as fine aggregate. *Materials Today: Proceedings*, 2020, vol. 32, 838-843, https://doi.org/10.1016/j.matpr.2020.04.049
- **AYININUOLA, G.M.** ; **AFOLAYAN, O. D.** Potential of Oyster Shell Ash Activated with Cement as soil Stabilizer for Road Construction. *International Journal of Engineering and Advanced Technology (IJEAT)*, June 2018, vol. 7 (5), ISSN 2249 - 8958
- **FEDERICO, A.** ; **VITONE, C** ; **MURIANNI, A.** On the mechanical behaviour of dredged submarine clayey sediments stabilised with lime or cement. *Canadian Geotechnical Journal*, 2015, vol. 52, 2030-2040